# EUROPÄISCHE PATENTANMELDUNG

(11) **EP 2 149 977 A2**
(43) Veröffentlichungstag der Anmeldung: **03.02.2010**
(21) Anmeldenummer: 09161360.4
(22) Anmeldetag: 28.05.2009
(51) Int. Cl.: H02P 7/29

(54) **Motoransteuerschaltung für ein batteriebetriebenes Elektrowerkzeug**

(30) Priorität: 28.07.2008 DE 102008040793
(71) Anmelder: Robert Bosch GmbH, 70442 Stuttgart (DE)
(72) Erfinder: Heizmann, Joachim, 78194, Immendingen (DE)

(57) **Zusammenfassung**

Es wird eine Schaltungsanordnung zur Ansteuerung eines Elektromotors vorgeschlagen, die einen ersten Halbleiterschalter (9), einen zweiten Halbleiterschalter (11), der mit dem ersten Halbleiterschalter (9) in Form einer ersten Halbbrücke (21) zusammengeschaltet ist, einen Wechselschalter (15), der eine zweite Halbbrücke (23) bildet, sowie eine Ansteuerelektronik (7) umfasst, die dazu angeordnet ist, den ersten Halbleiterschalter (9) und den zweiten Halbleiterschalter (11) anzusteuern, wobei die erste Halbbrückc (21) und die zweite Halbbrücke (23) derart zusammcngcschaltct sind, dass im Brückenzweig (25) ein Elektromotor (13) betreibbar ist.

## Beschreibung

Die vorliegende Erfindung betrifft eine Motoransteuerschaltung für ein batteriebetriebenes Elektrowerkzeug und ein Verfahren zur Ansteuerung eines Motors eines batteriebetriebenen Elektrowerkzeugs.

### Stand der Technik

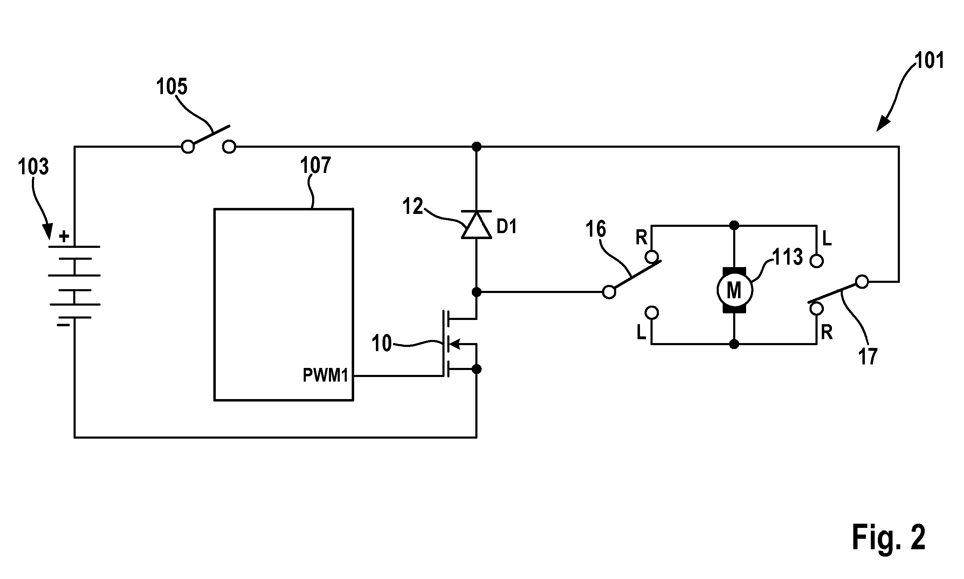

Gleichstrommotoren in batteriebetriebenen Elektrowerkzeugen werden überwiegend unter Verwendung von Pulsweitenmodulation (PWM) angesteuert. Eine in Fig. 2 schematisch dargestellte bekannte Schaltung 101 umfasst eine Energieversorgung von einer Batterie 103, die über einen Schalter 105 an die Ansteuerschaltung mit einem Motor zuschaltbar ist. Die Ansteuerschaltung umfasst einen einzelnen n-Kanal-MOSFET 10 sowie eine Freilaufdiode 12 und eine Ansteuerelektronik 107 zum Erzeugen von Pulsweiten modulierten Signalen, mit denen der n-Kanal-MOSFET 10 beaufschlagt wird. Eine Drehrichtungsumschaltung erfolgt mit einem mechanischen Kreuzschalter 16, 17 durch den Benutzer des Elektrowerkzeugs. Sind beide Schalter des mechanischen Kreuzschalters jeweils in der Stellung L, so dreht der Motor beispielsweise linksherum, während der Motor rechtsherum dreht, wenn beide Schalter des mechanischen Kreuzschalters 16, 17 in der jeweiligen Stellung R sind. Wird bei dem Elektrowerkzeug ein großer Teil des Lastzyklus mit einem PWM Tastverhältnis von vt <100% betrieben, so ist die Verlustleistung in der Freilaufdiode sehr hoch, so dass eine Kühlung erforderlich ist. Ein Tastverhältnis der PWM von vt <100% wird dazu benutzt, bei gleichbleibendem Batteriestrom den Motorstrom und damit das Motordrehmoment zu erhöhen. Entsprechende technische Ausgestaltungen sind in den Datenblättern einschlägig bekannter Hersteller dokumentiert.

Ein Nachteil der bekannten Schaltung ist, dass der Aufbau und die Verdrahtung der aus MOSFET, Freilaufdiode und Kühlkörper bestehenden Endstufe viel Platz einnehmen. Ein weiterer Nachteil ist, dass beim Kreuzschalter zwei Kontaktübergangswiderstände auftreten.

Die Druckschrift NL 1009329 C2 offenbart eine H-Brückenschaltung zur Ansteuerung eines Motors, wobei die Brückenschaltung ausschließlich aus elektronischen Schaltern besteht und der einzige mechanische Schalter dem Ein- oder Ausschalten der Versorgungsspannung dient. Bekannt ist ferner ein H- oder Vollbrückenbetrieb mit vier MOSFETs, beispielsweise aus einem Siemens Datenbuch Halbleiter 1998 aus dem Abschnitt "DC Motor Drives", Seiten 568 bis 570.

### Aufgabe der Erfindung

Die Aufgabe der Erfindung ist, eine Motoransteuerschaltung für ein batteriebetriebenes Elektrowerkzeug bereitzustellen, die insbesondere wenig Raum einnimmt.

### Beschreibung der Erfindung

Die Aufgabe wird durch eine Schaltungsanordnung gemäß dem unabhängigen Anspruch 1 und einem Verfahren gemäß dem unabhängigen Anspruch 11 gelöst. Die abhängigen Ansprüche definieren vorteilhafte Weiterbildungen der Erfindung.

Die erfindungsgemäße Schaltungsanordnung zur Ansteuerung eines Elektromotors umfasst einen ersten Halbleiterschalter und einen zweiten Halbleiterschalter. Vorzugsweise sind der erste Halbleiterschalter und der zweite Halbleiterschalter in Form einer ersten Halbbrücke zusammengeschaltet. Dabei entfällt das Erfordernis der herkömmlichen Freilaufdiode. Vorzugsweise ist die erste Halbbrücke derart symmetrisch ausgeführt, dass beide Halbleiterschalter von einem selben Typ sind. Ein Wechselschalter bildet eine zweite Halbbrücke, die je nach Schaltzustand des Wechselschalters einem ersten Kontaktübergangswiderstand mit wenigen mΩ und einem zweiten Widerstand von unendlich hohem Widerstand entspricht. Vorzugsweise ist der Wechselschalter als einfacher mechanischer Wechselschalter ausgebildet, der lediglich einen seiner Kontakte alternativ mit einem zweiten oder dritten seiner Kontakte durchschaltet. Bei dem einfachen Wechselschalter tritt ein Kontaktübergangswiderstand vorteilhaft nur einmal auf. Ferner ist eine Ansteuerelektronik vorgesehen, die dazu angeordnet ist, den ersten Halbleiterschalter und den zweiten Halbleiterschalter anzusteuern. Die Ansteuerschaltung ist vorzugsweise dazu ausgebildet, den ersten Halbleiterschalter und den zweiten Halbleiterschalter mittels Pulsweitenmodulation anzusteuern. Dabei ist vorgesehen, den ersten Halbleiterschalter und den zweiten Halbleiterschalter voneinander unabhängig anzusteuern. Die Ansteuerelektronik kann diskret ausgeführt sein oder als PWM-Baustein, wie beispielsweise einem Baustein NE555, einem Mikrokontroller oder Mikrocomputer, wobei ein Mikrokontroller bevorzugt ist. Die erste Halbbrücke und die zweite Halbbrücke, also der Wechselschalter, sind vorzugsweise derart zusammengeschaltet, dass im Brückenzweig der beiden Halbbrücken ein Elektromotor betreibbar ist. Eine Energieversorgung von beispielsweise einer Batterie oder einem Akkumulator ist über einen Hauptschalter wahlweise zuführbar. Da die erste Halbbrücke symmetrisch ist, kann sowohl ein positiver als auch ein negativer Strom in den Motor eingeprägt werden, so dass die Drehrichtung des Motors änderbar ist. Hierdurch ist es ermöglicht, dass der herkömmliche mechanische Kreuzschalter durch einen Wechselschalter ersetzt werden kann, der preiswerter ist. Dabei entfällt ein Kontaktübergangswiderstand und es treten somit weniger Durchlassverluste auf. Der Knotenpunkt der die beiden Halbleiterschalter umfassenden ersten Halbbrücke ist ferner mit einem Eingang der Ansteuerelektronik verbunden. Die Ansteuerelektronik ist vorzugsweise dazu ausgebildet, über diesen Eingang ein durch den Benutzer über den Wechselschalter vorgebbares Drehrichtungssignal zu erfassen. Vorzugsweise ist die Ansteuerelektronik dazu ausgebildet, das Drehrichtungssignal zu erfassen, wenn die Ansteuerelektronik den ersten Halbleiterschalter und den zweiten Halbleiterschalter derart ansteuert, dass beide Halbleiterschalter sperren. Mit anderen Worten erfolgt diese Richtungserkennung zu Beginn des Lastzyklus, wenn der Motor unbestromt ist. Je nach Stellung des Wechselschalters ist einer der Motoranschlüsse mit der positiven oder der negativen Batteriespannung verbunden. Der andere Motoranschluss ist mit einem Eingang der Ansteuerelektronik verbunden. In Abhängigkeit von dem Signal, das die Ansteuerelektronik an ihrem Eingang je nach Stellung des Wechselschalters erfasst, steuert die Ansteuerelektronik die Halbleiterschalter an. Während der Motor läuft wird ein Umschalten der Drehrichtung mechanisch verhindert. Die erfindungsgemäße Kombination aus zwei Halbleiterschaltern und einem mechanischen Wechselschalter ist aus dem Stand der Technik nicht bekannt.

Die Ansteuerelektronik ist vorzugsweise dazu ausgebildet, den ersten Halbleiterschalter und den zweiten Halbleiterschalter mit Pulsfolgen anzusteuern, die dem erfassten Drehrichtungssignal zugeordnet sind. Vorzugsweise wird einer der Halbleiterschalter mit einer Pulsfolge angesteuert, die invers zur Pulsfolge für den anderen der beiden Halbleiterschalter und mit wenigstens einer Totzeit versehen ist. Je nach Schaltzustand der beiden Halbleiterschalter ist dann der Elektromotor über den Knotenpunkt der ersten Halbbrücke mit dem positiven oder dem negativen Pol der Batterie verbunden, wobei der Motorstrom über den Wechselschalter, je nach Schalterstellung, vom positiven Pol der Batterie durch den Motor über einen der beiden Halbleiterschalter an den negativen Pol der Batterie, oder vom positiven Pol der Batterie über den anderen der beiden Halbleiterschalter durch den Motor an den negativen Pol der Batterie fließen kann.

Vorzugsweise sind der erste Halbleiterschalter und der zweite Halbleiterschalter jeweils als MOSFETs, beispielsweise als n-Kanal-MOSFETs, ausgebildet.

Vorzugsweise wird die beschriebene Schaltungsanordnung als Ansteuerschaltung in einem batteriebetriebenen Elektrowerkzeug verwendet.

Ein weiterer Aspekt der Erfindung ist auf ein Verfahren zur Ansteuerung eines Elektromotors mittels der beschriebenen Schaltungsanordnung gerichtet, das die Schritte umfasst: Erfassen eines Drehrichtungssignals in einem unbestromten Zustand des Elektromotors; und in Abhängigkeit von dem erfassten Drehrichtungssignal: Ausgeben einer ersten dem erfassten Drehrichtungssignal zugeordneten Pulsfolge an einen der Halbleiterschalter, Ausgeben einer zweiten Pulsfolge, die zur ersten Pulsfolge invers und mit wenigstens einer Totzeit versehen ist an den anderen der Halbleiterschalter.

Die erfindungsgemäße Schaltungsanordnung ermöglicht eine signifikante Reduzierung der Verlustleistung, falls der Strom typischerweise größer als beispielsweise 10 A und das Tastverhältnis vt der PWM typischerweise kleiner als beispielsweise 80% ist. Auf der Grundlage entsprechender Datenblätter sind hierbei die Freilaufverluste einer Diode mit Pv = Uf * Imot * (1 - vt) in herkömmlicher Schaltung im Vergleich zu Durchlassverlusten des Freilauf-MOSFET mit PV=Imot² * Rdson * (1 - vt) in der erfindungsgemäßen Schaltungsanordnung anzusetzen. Beispielsweise ist Uf = 0,5V bis 0,7V und Rdson = 6mΩ bis 30mΩ. Der Kühlkörper kann beispielsweise vorteilhafterweise entfallen. Die MOSFETs können auf einer Platine, beispielsweise der Steuerplatine, integriert werden. Hierdurch ergibt sich ein weiterer Vorteil, dass die ansonsten erforderlichen Verdrahtungsleitungen bei herkömmlicherweise getrennt von der Steuerplatine angeordnetem Kühlkörper mit daran angebrachter Freilaufdiode und/oder MOSFET zusammen mit dem Kühlkörper entfallen. Außerdem können kleinere Bauformen der Transistoren, beispielsweise D-Pack anstelle TO220 gewählt werden. Weiterhin kann vorteilhaft die herkömmliche aufwändige Verdrahtung vereinfacht werden. Die Vereinfachung der Verdrahtung führt vorzugsweise zu einer geringeren Zahl von Knotenpunkten und/oder kürzeren Leitungslängen und/oder einer geringeren Zahl von Leitungen. Hierdurch ist eine Verringerung der herkömmlichen baulichen Abmessungen möglich.

Zusammengefasst stellt die Erfindung also eine Schaltungsanordnung zur Ansteuerung eines Elektromotors bereit, die kleiner gefertigt werden kann als eine herkömmliche Schaltung.

### Zeichnungen

Ein Ausführungsbeispiel der Erfindung ist in der Zeichnung dargestellt und wird in der nachfolgenden Beschreibung näher erläutert.

Es zeigen:
- Fig. 1: ein schematisches Schaltbild der erfindungsgemäßen Schaltungsanordnung;
- Fig. 2: ein schematisches Schaltbild einer Schaltungsanordnung aus dem Stand der Technik; und
- Fig. 3: ein Zeitdiagramm einer PWM-Pulsfolge zur Ansteuerung der Halbleiterschalter gemäß der Erfindung.

### Beschreibung

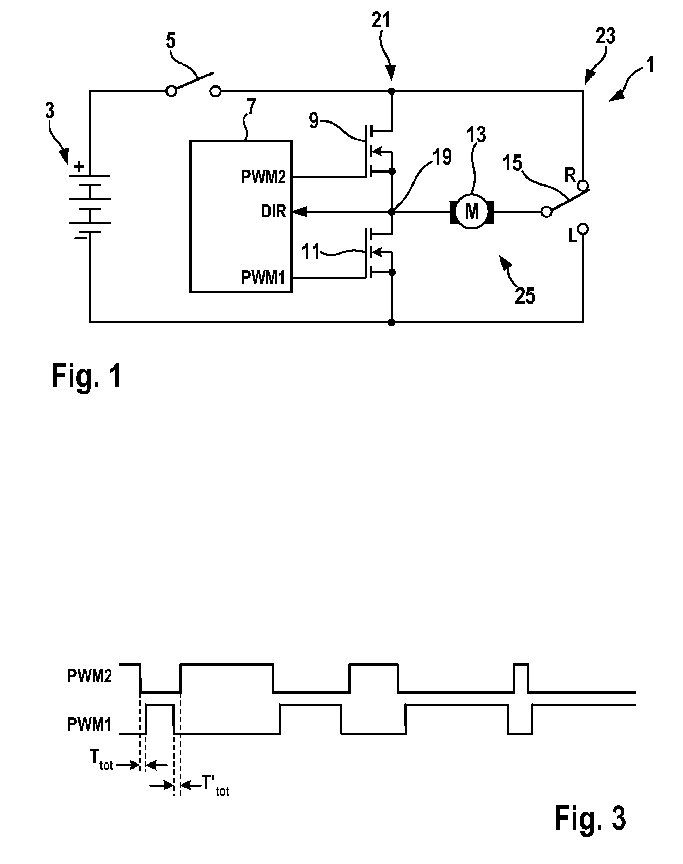

Fig 1. zeigt in einem schematischen Schaltbild eine erfindungsgemäße Schaltungsanordnung 1 zur Ansteuerung eines Elektromotors, wobei einzelne diskrete Bauelemente wie beispielsweise Widerstände zugunsten einer besseren Verständlichkeit fortgelassen sind. Die erfindungsgemäße Schaltungsanordnung 1 umfasst einen ersten Halbleiterschalter 9 und einen zweiten Halbleiterschalter 11, der mit dem ersten Halbleiterschalter 9 in Form einer ersten Halbbrücke 21 zusammengeschaltet ist. Ferner umfasst die erfindungsgemäße Schaltungsanordnung 1 einen Wechselschalter 15, der eine zweite Halbbrücke 23 bildet. Diese zweite Halbbrücke 23 entspricht einem Kontaktübergangswiderstand von wenigen mΩ im durchgeschalteten Zweig und einem unendlich hohen Widerstand im offenen Zweig. Eine Ansteuerelektronik 7 ist dazu angeordnet, den ersten Halbleiterschalter 9 und den zweiten Halbleiterschalter 11 anzusteuern. Ferner sind in der erfindungsgemäßen Schaltungsanordnung 1 die erste Halbbrücke 21 und die zweite Halbbrücke 23 derart zusammengeschaltet, dass im Brückenzweig 25 der beiden Halbbrücken 21 und 23 ein Elektromotor 13 betreibbar ist. Der Schaltungsanordnung ist eine Energieversorgung von beispielsweise einer Batterie beziehungsweise einem Akkumulator 3 über einen Hauptschalter 5 wahlweise zuführbar.

Die Ansteuerelektronik 7 ist dazu ausgebildet, den ersten Halbleiterschalter 9 und den zweiten Halbleiterschalter 11 mittels Pulsweitenmodulation anzusteuern. Der Pulsweitenmodulation entsprechende Signalfolgen PWM1 und PWM2 können durch eine diskrete Schaltung, einen PWM-Baustein, wie beispielsweise dem NE555 oder einem Mikrokontroller oder Mikrocomputer erzeugt werden. Aufgrund der symmetrischen Ausführung der beiden Halbleiterschalter 9 und 11 in der ersten Halbbrücke 21 kann wahlweise ein positiver beziehungsweise ein negativer Strom in den Motor 13 eingeprägt werden, so dass die Drehrichtung des Motors änderbar ist. Während der eine Anschluss des Motors 13 am Knotenpunkt 19 der ersten Halbbrücke 21 angeschlossen ist, ist der andere Anschluss des Motors 13 je nach Stellung des Wechselschalters 15 mit dem Pluspol oder dem Minuspol der Batterie 3 verbunden und liegt entsprechend auf einem positiven oder negativen Potential. Ist beispielsweise der Wechselschalter 15 in der Stellung R, so fließt der Strom vom positiven Pol der Batterie 3 über den Wechselschalter 15 durch den Motor 13 und über den Knotenpunkt 19 durch den zweiten Halbleiterschalter 11, sobald dieser im leitenden Zustand ist, an den negativen Pol der Batterie 3. Der Knotenpunkt 19 der ersten Halbbrücke 21 ist ferner mit einem Eingang der Ansteuerelektronik 7 verbunden. Erfindungsgemäß ist die Ansteuerelektronik 7 dazu ausgebildet, ein über den Wechselschalter 15 vorgebbares Drehrichtungssignal DIR zu erfassen. Zu Beginn des Lastzyklus ist der Motor 13 unbestromt. In diesem Falle steuert die Ansteuerelektronik den ersten Halbleiterschalter 9 und den zweiten Halbleiterschalter 11 derart an, dass beide Halbleiterschalter 9 und 11 sperren bzw. offen sind. Je nach Stellung des Wechselschalters 15 ist dann der dem Knotenpunkt 19 gegenüberliegende Anschluss des Motors 13 auf positivem oder negativem Potential und damit auch über die Wicklungen des Motors der Knotenpunkt 19 auf positivem oder negativem Potential. Die Ansteuerelektronik 7 ist gemäß der Erfindung dazu ausgebildet, das Potential als Drehrichtungssignal DIR zu erfassen und somit eine vom Benutzer gewünschte Drehrichtung zu erkennen. Die Ansteuerelektronik 7 ist ferner dazu ausgebildet, auf der Grundlage des erfassten Drehrichtungssignals DIR den ersten Halbleiterschalter 9 und den zweiten Halbleiterschalter 11 mit Pulsfolgen PWM1 und PWM2 anzusteuern, die dem erfassten Drehrichtungssignal DIR zugeordnet sind. Beispielsweise befindet sich in dem Fall, dass der Wechselschalter 15 in der Stellung R und der Motor 13 unbestromt ist, der Knotenpunkt 19 auf dem positivem Potential der Batteriespannung. Die Ansteuerelektronik 7 erfasst über ihren Eingang DIR, dass der Benutzer eine Rechtsdrehung des Motors wünscht und erzeugt dementsprechende Pulsfolgen PWM1 und PWM2 zur Ansteuerung der Halbleiterschalter 9 und 11. Die Pulsfolgen PWM1 und PWM2 sind invers zueinander und können vorteilhafterweise mit Totzeiten behaftet sein.

Ein versehentliches Umschalten der Drehrichtung wird mechanisch verhindert. Beispielsweise wird der Wechselschalter 15 verriegelt, sobald der Motor bestromt ist. Alternativ sind der Wechselschalter 15 und der Hauptschalter 5 derart in mechanischem Eingriff miteinander, dass der Wechselschalter 15 nicht betätigbar ist, wenn der Hauptschalter 5 eingeschaltet ist.

Der erste Halbleiterschalter 9 und der zweite Halbleiterschalter 11 können jeweils als MOSFETs, beispielsweise, wie in Fig. 1 gezeigt, als n-Kanal-MOSFETs ausgebildet sein.

Die beschriebene erfindungsgemäße Schaltungsanordnung 1 kann als Ansteuerschaltung in einem batteriebetriebenen Elektrowerkzeug verwendet werden.

Dadurch, dass die gemäß dem Stand der Technik, wie in Fig. 2 gezeigt, herkömmlich eingesetzte Freilaufdiode durch einen zweiten Halbleiterschalter ersetzt ist, der ebenso wie der erste Halbleiterschalter mit Ansteuerpulsen beaufschlagt wird, wird eine Verlustleistung drastisch reduziert. Besonders signifikant ist die Reduzierung, falls der Strom größer ist als beispielsweise 10 A und das Tastverhältnis vt der Pulsweitenmodulation kleiner ist als beispielsweise 80%. Die Freilaufverluste der Diode mit Pv = Uf * Imot * (1 - vt) in herkömmlicher Schaltung stehen den Durchlassverlusten des MOSFETs mit Pv = Imot² * Rdson * (1 - vt) in der erfindungsgemäßen Schaltung gegenüber, wobei typischerweise Uf = 0,5 V bis 0,7 V beträgt und Rdson typischerweise Rdson = 6mΩ bis 30 mΩ ist. Hierdurch entfällt das Erfordernis einer aufwändigen Kühlung der nunmehr entfallenen Freilaufdiode.

Es können kleinere MOSFETs als herkömmlich eingesetzt werden, für die zudem kein Kühlkörper erforderlich ist, so dass die MOSFETS auf der Steuerplatine integriert werden können. Hierdurch ergibt sich ein weiterer Vorteil, dass die ansonsten erforderlichen Verdrahtungsleitungen bei herkömmlicherweise getrennt von der Steuerplatine angeordnetem Kühlkörper mit daran angebrachter Freilaufdiode und/oder MOSFET zusammen mit dem Kühlkörper entfallen. Ferner können kleinere Bauformen der Transistoren, beispielsweise D-Pack anstelle von TO220 verwendet werden. Hierdurch ist es möglich, das gesamte Elektrowerkzeug in einer reduzierten Baulänge beziehungsweise kompakter zu fertigen.

Fig. 3 stellt schematisch ein Zeitdiagramm einer PWM-Pulsfolge zur Ansteuerung der beiden Halbleiterschalter gemäß der Erfindung dar. Das diesem Zeitdiagramm zugrunde liegende erfindungsgemäße Verfahren zur Ansteuerung eines Elektromotors mittels einer wie oben beschriebenen Schaltungsanordnung umfasst die Schritte: Erfassen eines Drehrichtungssignals DIR in einem unbestromten Zustand des Elektromotors; in Abhängigkeit von dem erfassten Drehrichtungssignal DIR: Ausgeben einer ersten dem erfassten Drehrichtungssignal zugeordneten Pulsfolge PWM1 an einen der Halbleiterschalter 9 und Ausgeben einer zweiten Pulsfolge PWM2, die zur ersten Pulsfolge PWM1 invers und vorteilhafterweise mit wenigstens einer Totzeit T versehen ist, an den anderen der Halbleiterschalter 11. Je nach Schaltzustand der beiden Halbleiterschalter ist dann der Elektromotor über den Knotenpunkt der ersten Halbbrücke mit dem positiven oder dem negativen Pol der Batterie verbunden, wobei der Motorstrom über den Wechselschalter 15, in Abhängigkeit von der Schalterstellung, fließen kann. Beispielsweise, in der Schalterstellung L, fließt der Strom vom positiven Pol der Batterie 3 über einen der beiden Halbleiterschalter 9, sofern er leitend ist, über den Knotenpunkt 19 durch den Motor 13 über den Schalter 15 an den negativen Pol der Batterie oder, in der Schalterstellung R, vom positiven Pol der Batterie 3 über den Schalter 15 durch den Motor 13 über den anderen der beiden Halbleiterschalter 11, sofern er leitend ist, an den negativen Pol der Batterie.

Zusammengefasst schafft die vorliegende Erfindung eine Schaltungsanordnung zur Ansteuerung eines Elektromotors mit zwei Halbleiterschaltern und einem einfachen mechanischen Wechselschalter sowie mit einer derart geeignet betriebenen Ansteuerelektronik, wodurch gegenüber bekannten Anordnungen auftretende Verlustleistungen verringert sind, so dass auf Kühlkörper verzichtet werden kann und damit kleinere bauliche Abmessungen der Schaltungsanordnung möglich sind und ferner Kontaktübergangswiderstände reduziert sind. Aufgrund des Wegfalls des herkömmlicherweise getrennt von der Steuerplatine angeordneten Kühlkörpers ist weiterhin eine Verdrahtung vorteilhaft vereinfacht, was beispielsweise eine geringere Zahl von Knotenpunkten und/oder kürzere Leitungslängen und/oder eine geringere Zahl von Verdrahtungsleitungen ermöglicht.

Somit kann gemäß der Erfindung ein batteriebetriebenes Elektrowerkzeug mit einer reduzierten Baulänge beziehungsweise kompakt gefertigt werden.

## Patentansprüche

1. Schaltungsanordnung zur Ansteuerung eines Elektromotors, **dadurch gekennzeichnet, dass** sie umfasst:
einen ersten Halbleiterschalter (9);
einen zweiten Halbleiterschalter (11), der mit dem ersten Halbleiterschalter (9) in Form einer ersten Halbbrücke (21) zusammengeschaltet ist;
einen Wechselschalter (15), der eine zweite Halbbrücke (23) bildet;
eine Ansteuerelektronik (7), die dazu angeordnet ist, den ersten Halbleiterschalter (9) und
den zweiten Halbleiterschalter (11) anzusteuern,
wobei die erste Halbbrücke (21) und die zweite Halbbrücke (23) derart zusammengeschaltet sind, dass im Brückenzweig (25) ein Elektromotor (13) betreibbar ist.

2. Schaltungsanordnung nach Anspruch 1, **dadurch gekennzeichnet, dass** die Ansteuerelektronik (7) einen Mikrokontroller aufweist, der dazu vorgesehen ist, den ersten Halbleiterschalter (9) und den zweiten Halbleiterschalter (11) mittels Pulsweitenmodulation anzusteuern.

3. Schaltungsanordnung nach Anspruch 1 oder 2, **dadurch gekennzeichnet, dass** die Ansteuerelektronik (7) dazu ausgebildet ist, den Elektromotor (13) wahlweise in einer vorgebbaren Drehrichtung anzusteuern.

4. Schaltungsanordnung nach einem der vorangehenden Ansprüche, **dadurch gekennzeichnet, dass** die Ansteuerelektronik (7) dazu ausgebildet ist, ein über den Wechselschalter (15) vorgebbares Drehrichtungssignal (DIR) zu erfassen.

5. Schaltungsanordnung nach Anspruch 4, **dadurch gekennzeichnet, dass** die Ansteuerelektronik (7) dazu ausgebildet ist, das Richtungssignal (DIR) zu erfassen, wenn die Ansteuerelektronik (7) den ersten Halbleiterschalter (9) und den zweiten Halbleiterschalter (11) derart ansteuert, dass beide Halbleiterschalter (9, 11) sperren.

6. Schaltungsanordnung nach Anspruch 4 oder 5, **dadurch gekennzeichnet, dass** die Ansteuerelektronik (7) dazu ausgebildet ist, den ersten Halbleiterschalter (9) und den zweiten Halbleiterschalter (11) mit dem erfassten Drehrichtungssignal (DIR) zugeordneten Pulsfolgen anzusteuern.

7. Schaltungsanordnung nach einem der vorangegangenen Ansprüche, **dadurch gekennzeichnet, dass** der erste Halbleiterschalter (9) und der zweite Halbleiterschalter (11) jeweils als MOSFETs ausgebildet sind.

8. Schaltungsanordnung nach Anspruch 7, **dadurch gekennzeichnet, dass** die Halbleiterschalter (9, 11) als n-Kanal-MOSFETs ausgebildet sind.

9. Schaltungsanordnung nach einem der vorangegangenen Ansprüche, die als Ansteuerschaltung in einem batteriebetriebenen Elektrowerkzeug verwendet wird.

10. Schaltungsanordnung nach einem der vorangegangenen Ansprüche, **dadurch gekennzeichnet, dass** die Ansteuerelektronik (7) mit den Halbleiterschaltern (9, 11) auf einer Platine integriert ist.

11. Verfahren zur Ansteuerung eines Elektromotors mittels einer Schaltungsanordnung nach einem der vorangegangenen Ansprüche, umfassend die Schritte:
Erfassen eines Richtungssignals (DIR) in einem unbestromten Zustand des Elektromotors; in Abhängigkeit von dem erfassten Richtungssignal (DIR):
Ausgeben einer ersten dem erfassten Richtungssignal zugeordneten Pulsfolge (PWM1; PWM2) an einen der Halbleiterschalter (9; 11),
Ausgeben einer zweiten Pulsfolge (PWM2; PWM1), die zur ersten Pulsfolge (PWM1; PWM2) invers und mit wenigstens einer Totzeit (T) versehen ist, an den anderen der Halbleiterschalter (11; 9).
